# EUROPEAN PATENT APPLICATION

(11) **EP 4 844 681 A1**
(43) Date of publication of application: **25.11.2026**
(21) Application number: 26178609.9
(22) Date of filing: 13.05.2026
(51) Int. Cl.: G06T 7/10, G06T 7/11

(54) **TEXT-PROMPTED THREE-DIMENSIONAL IMAGE SEGMENTATION WITH FRACTAL VOLUMETRIC ENCODING**

(30) Priority: 22.05.2025 US 202519216487
(71) Applicant: Microsoft Technology Licensing, LLC, Redmond, WA 98052 (US)
(72) Inventor: ZHAO, ZHENGDE, Redmond, 98052 (US); CODELLA, NOEL CHRISTOPHER, Redmond, 98052 (US); PANG, ALBERTO SANTAMARIA, Redmond, 98052 (US)
(74) Representative: CMS Cameron McKenna Nabarro Olswang LLP

(57) **Abstract**

A method obtains a three-dimensional image; a set of two-dimensional slices may be determined from the three-dimensional image; fractal encoding may be applied to the set of two-dimensional slices; a text prompt may be obtained; the fractally encoded slices may be segmented according to the text prompt; and a response may be provided to the text prompt according to the segmentation.

## Description

### BACKGROUND

Medical image segmentation in three-dimensional (3D) modalities, such as computed tomography (CT) and magnetic resonance imagery (MRI), is essential for clinical decision-making but remains computationally expensive and difficult to scale. Two-dimensional (2D) images can be addressed by multimodal segmentation using text prompts, yet extending these models to 3D volumes remains challenging due to memory constraints, high computational costs, and difficulties in retaining spatial coherence.

### SUMMARY

Solutions disclosed herein encode three-dimensional volumetric context into a compact 2.5-dimensional format, allowing the utilization of pretrained two-dimensional foundation models. Examples obtain a three-dimensional image; determine, from the three-dimensional image, a set of two-dimensional slices; apply fractal encoding to the set of two-dimensional slices; obtain a text prompt; segment the fractally encoded slices according to the text prompt; and respond to the text prompt according to the segmentation.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram illustrating a 3D image segmentation management architecture, in accordance with aspects of the present disclosure.
FIG. 2 is a block diagram illustrating components of a 3D image segmentation system, in accordance with aspects of the present disclosure.
FIG. 3 is a block diagram depicting a 3D image segmentation framework, in accordance with some embodiments of the present disclosure.
FIG. 4 is a block diagram illustrating a 3D image segmentation framework, in accordance with some embodiments of the present disclosure.
FIG. 5 is a block diagram depicting an embodiment of a fractal encoding process, in accordance with some embodiments of the present disclosure.
FIG. 6 is a visualization of the encoding of one side of a 3D context, in accordance with some embodiments of the present disclosure.
FIG. 7 is a flow diagram of a method for segmenting a 3D image, in accordance with some embodiments of the present disclosure.
FIG. 8 is a block diagram of an example computing device that may perform one or more of the operations described herein, in accordance with some embodiments of the present disclosure.

### DETAILED DESCRIPTION

The evolution of medical image segmentation networks has been marked by continual innovation to improve dense predictions and adapt to diverse imaging challenges. Early breakthroughs with 2D/3D U-Net established the viability of supervised dense prediction, leading to the development of specialized architectures such as UNet++, H-DenseUNet, and SegResNet, that catered to different modalities and anatomical semantics. Building on these foundations, frameworks like nnUNet introduced comprehensive hierarchical designs to enhance the coarse-to-fine learning capabilities. Additionally, Vision Transformers (ViTs) have introduced global attention mechanisms and larger effective receptive fields, with models like UNETR pushing the boundaries of segmentation accuracy despite the inherent computational challenges.

To address the high complexity of standard ViTs, hierarchical transformers such as the Swin Transformer have been employed in systems like SwinUNETR, enabling efficient extraction of fine-grained features through sliding window strategies. Concurrently, depth-wise convolutions have emerged as a promising alternative for emulating large kernel operations, as demonstrated by architectures like 3D UX-Net, although their performance can be limited when dealing with multi-scale tissue segmentation. With advances in medical foundation models, it has significantly enhanced the capabilities of medical image segmentation, particularly through their ability to perform diverse segmentation tasks guided by spatial or text prompts. Models such as MedSAM and BiomedParse leverage powerful pretrained general-domain models to achieve flexible, task-agnostic segmentation through natural language descriptions. Although these models have shown great promise in 2D segmentation, extending them to 3D data poses substantial challenges due to dramatic increases in computational and memory requirements. Addressing the specific challenges of 3D medical imaging, interactive prompt-based frameworks such as SegVol have been developed. SegVol effectively uses spatial prompting methods, including bounding boxes and interactive points, to achieve robust performance on 3D segmentation tasks. Nevertheless, SegVol exhibits significant limitations when relying solely on text prompts, as text alone provides limited spatial contextualization for volumetric structures.

The Segment Anything Model (SAM) framework has also been adapted to volumetric data, exemplified by SAM3D and 3D-SAutoMed. SAM3D offers competitive segmentation results through unified 3D processing with fewer parameters; however, it lacks extensive validation across varied clinical datasets. Similarly, 3D-SAutoMed integrates both local and global context to automate prompt-driven segmentation but currently lacks detailed comparative evaluations against standard convolutional and transformer architectures, and some implementation specifics remain ambiguous. Universal prompt-based segmentation methods, such as One-Prompt to Segment All Medical Images, have demonstrated promising zero-shot segmentation capabilities driven primarily by spatial prompting, e.g., points or bounding boxes. However, the effectiveness of these methods strongly relies on prompt specificity and quality, and their robustness and generalizability have yet to be thoroughly validated. It is important to note that the above-mentioned SAM- derived methods primarily rely on spatial prompts rather than text-based prompts, which differentiates them from the text-prompt-based segmentation described in this disclosure.

Effective data encoding strategies are essential for enhancing segmentation efficiency and accuracy. Advancements in representation learning, particularly through transformer-based architectures and self-supervised approaches, have improved the quality and expressiveness of encoded features. However, a need exists for contextualizing text information within volumetric data.

Medical image segmentation is a fundamental task in medical imaging, essential for accurate clinical diagnostics, treatment planning, and disease progression monitoring. While segmentation of 3D modalities, such as computed tomography (CT) and magnetic resonance imagery (MRI), provides valuable anatomical and pathological insights, extending segmentation methods from 2D to 3D introduces substantial computational complexity and practical deployment challenges. Traditional 3D convolutional approaches often lead to redundant processing, as adjacent slices inherently share overlapping structural information. A slice is a 2D image that represents a subsample of data from the 3D image. The 3D image can be decomposed through segmentation into a set of slices, such that a particular slice is parallel to the other slices in the set.

Models such as MedSAM and Biomed-Parse have shown considerable success, leveraging large-scale pretrained models initially developed for general computer vision domains. However, adapting these prompt-based models to volumetric data remains challenging, as computational and memory demands escalate dramatically when processing large 3D volumes. An alternative is offered by promptable 3D segmentation methods such as SegVol, which effectively utilize bounding boxes or points as prompts but struggle when employing text prompts alone. A fundamental limitation arises from an inability to adequately contextualize text information within volumetric data, highlighting a critical technical gap. Traditional volumetric processing at a fixed spatial scale is inefficient, necessitating complex network architectures that implicitly learn transformations equivalent to data encodings. However, volumetric information can be used by 2D model architectures. In some cases, the mathematical concept of fractal can be employed, in which infinity can be encoded in a finite space, such as the Sierpiński carpet, a plane fractal and the Koch curve, defying the traditional notion of dimensionality. Fractal Volumetric Encoding (FVE), a novel encoding strategy, can be used to recursively compress 3D volumes into patterns of reducing scale on the 2D plane to leverage pre-trained 2D foundation models.

Another major challenge in text-prompted 3D segmentation is accurately determining whether the prompted anatomical structures are present in each individual slice, as errors can result in numerous false-positive predictions. In some embodiments, an Independent Segmentation Discriminator (ISD) module can be employed, which independently verifies the presence of the prompted structures on a per-slice basis. By effectively filtering irrelevant slices, the ISD significantly reduces false positives and enhances the overall reliability of text-prompted segmentation.

Embodiments of the present disclosure address the above noted and other issues by providing techniques to recursively compress 3D volumes into patterns of reducing scale on the 2D plane and filtering inapplicable slices of the volume.

Any combination of one or more computer-usable or computer-readable media may be utilized. For example, a computer-readable medium may include one or more of a portable computer diskette, a hard disk, a random-access memory (RAM) device, a read-only memory (ROM) device, an erasable programmable read-only memory (EPROM, or flash memory) device, a portable compact disc read-only memory (CDROM), an optical storage device, and a magnetic storage device. Computer program code for carrying out operations of the present disclosure may be written in any combination of one or more programming languages. Such code may be compiled from source code to assembly language or machine code suitable for the device or computer on which the code will be executed.

Embodiments may also be implemented in cloud computing environments. In this description and the following claims, "cloud computing" may be defined as a model for enabling ubiquitous, convenient, on-demand network access to a shared pool of configurable computing resources, e.g., networks, servers, storage, applications, and services, that can be rapidly provisioned via virtualization and released with minimal management effort or service provider interaction and then scaled accordingly. A cloud model can be composed of various characteristics, e.g., on-demand self-service, broad network access, resource pooling, rapid elasticity, and measured service), service models (e.g., Software as a Service ("SaaS"), Platform as a Service ("PaaS"), and Infrastructure as a Service ("IaaS")), and deployment models, e.g., private cloud, community cloud, public cloud, and hybrid cloud.

The flow diagrams and block diagrams in the attached figures illustrate the architecture, functionality, and operation of possible implementations of systems, methods, and computer program products according to various embodiments of the present disclosure. In this regard, each block in the flow diagrams or block diagrams may represent a module, segment, or portion of code, which comprises one or more executable instructions for implementing the specified logical function(s). It will also be noted that each block of the block diagrams and/or flow diagrams, and combinations of blocks in the block diagrams and/or flow diagrams, may be implemented by special purpose hardware-based systems that perform the specified functions or acts, or combinations of special purpose hardware and computer instructions. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flow diagram and/or block diagram block or blocks.

The systems and methods described herein may operate on a cloud infrastructure that supports cloud-based storage resources, computing resources, and the like. Example cloud-based storage resources offer significant storage capacity available on-demand at a low cost. Further, these cloud-based storage resources may be fault-tolerant and highly scalable, which can be costly to achieve in private data storage systems. Example cloud-based computing resources are available on-demand and may be priced based on actual usage levels of the resources. Typically, the cloud infrastructure is dynamically deployed, reconfigured, and decommissioned in a rapid manner.

In the described systems and methods, a three-dimensional image segmentation management system utilizes a two-dimensional model. However, these systems and methods are applicable to any type of model, and any type of data storage and retrieval platform, using any data storage architecture and using any language to store and retrieve data within the data storage and retrieval platform. The systems and methods described herein provide a scalable, promptable, and efficient approach for image segmentation, making 3D-aware segmentation accessible for real-world applications.

Some embodiments of the present disclosure overcome computational and scalability challenges inherent to volumetric image segmentation by leveraging efficient fractal-informed encoding and robust prompt-driven segmentation. Specifically, using FVE, in an embodiment, a focal slice can be encoded along with its corresponding 3D context into a compact red/green/blue (RGB) representation, enabling effective segmentation guided by text prompts without additional computational overhead. In some embodiments, the presence of the prompted object within encoded slices can be predicted using a dedicated ISD classification module. In particular, applying fractal encoding to the set of two-dimensional slices can reduce processing requirements, resulting in increased processing speed, because a two-dimensional model can be employed for classification. Additionally, reduced processor load may be achieved due to the reduced computational overhead of performing this segmenting against a two-dimensional model as opposed to a three-dimensional model.

Fractals are intricate geometric figures that exhibit self-similarity at different scales, meaning that their patterns repeat at progressively smaller sizes. Unlike traditional Euclidean shapes like circles or triangles, fractals are often irregular, fragmented, and infinitely complex. Despite this complexity, they are governed by simple mathematical rules. This paradox - simple rules creating infinite detail - makes fractals both mathematically intriguing and visually captivating.

The term "fractal" was coined by mathematician Benoît B. Mandelbrot in 1975, deriving from the Latin word fractus, meaning "broken" or "fractured." Mandelbrot introduced the concept to describe naturally occurring phenomena that could not be easily modeled using classical geometry. Mountains, coastlines, clouds, and even broccoli exhibit fractal-like properties, with similar patterns appearing at varying levels of zoom. This characteristic makes fractals useful for modeling complex structures in nature.

One of the most famous examples of a mathematical fractal is the Mandelbrot set, generated by a simple iterative formula involving complex numbers: ${z}_{n + 1} = {z}_{n}^{2} + c$. When plotted on a complex plane, the Mandelbrot set reveals an intricate boundary that continues to reveal detail no matter how closely one zooms in.

Fractals can be either deterministic or stochastic. Deterministic fractals, like the Sierpiński triangle, the Sierpiński carpet (applied to squares), or the Koch curve (also known as the Koch snowflake), are generated by repeating a specific set of rules or transformations. Each iteration adds more complexity, resulting in an infinitely detailed shape. Stochastic fractals, on the other hand, incorporate elements of randomness, making them ideal for simulating natural phenomena like terrain generation in computer graphics or stock market fluctuations.

Fractal geometry has a wide range of applications beyond visual aesthetics. In computer science, fractals can be used in image compression, in which repeating patterns allow for efficient data storage. Fractals provide an ability to bridge the gap between abstract mathematics and tangible reality. Fractals provide a language for describing the complexity observed in nature - a complexity that defies simple categorization but follows deep, underlying patterns. As computational tools improve, the ability to explore and apply fractals continues to grow, revealing ever more connections between math, science, and the natural world.

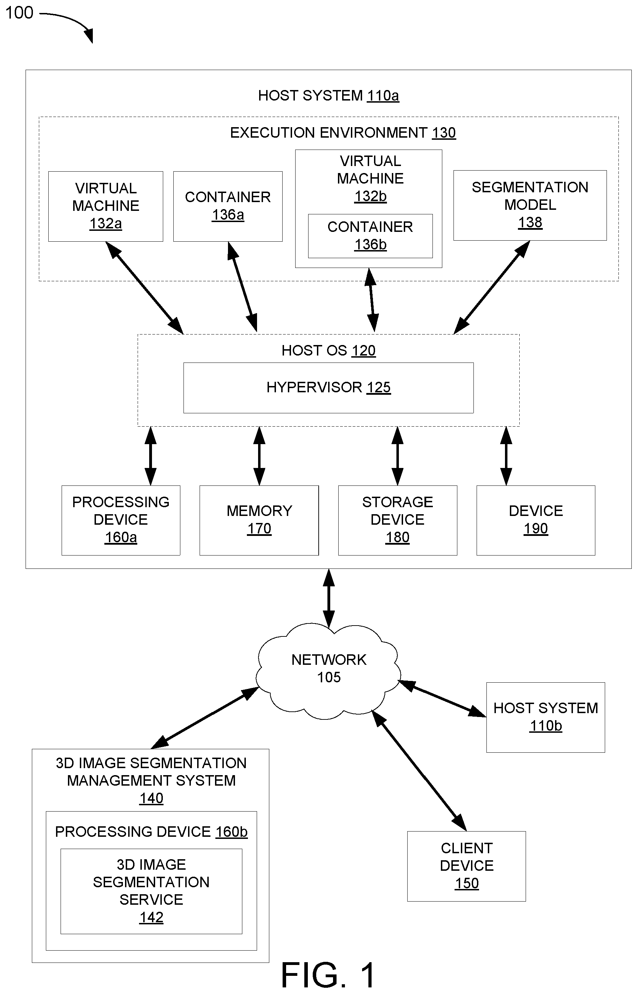

FIG. 1 is a block diagram that illustrates an example 3D image segmentation management architecture 100, in accordance with some embodiments. However, other 3D image segmentation management architectures are possible, and the implementation of a computer system utilizing examples of the disclosure are not limited to the specific architecture depicted by FIG. 1.

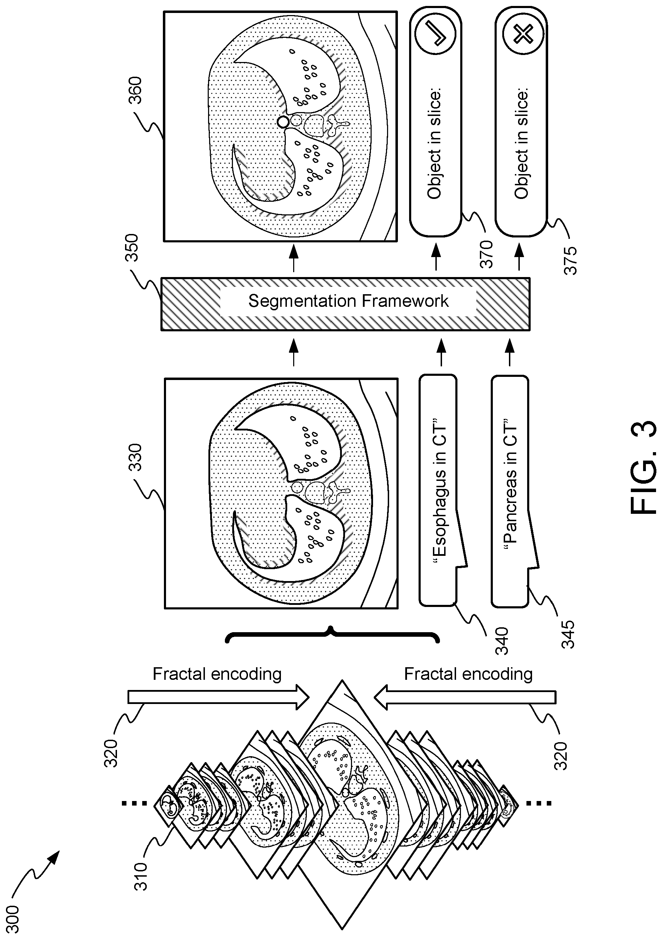

As shown in FIG. 1, 3D image segmentation management architecture 100 includes host systems 110a and 110b, 3D image segmentation management system 140, and client device 150. The host systems 110a and 110b, 3D image segmentation management system 140, and client device 150 may each include hardware such as processing devices 160a and 160b, memory 170, which may include volatile memory devices, e.g., random access memory (RAM), non-volatile memory devices, e.g., flash memory, and/or other types of memory devices, a storage device 180, e.g., one or more magnetic hard disk drives, a Peripheral Component Interconnect (PCI) solid state drive, a Redundant Array of Independent Disks (RAID) system, or a network attached storage (NAS) array, and one or more devices 190, e.g., a Peripheral Component Interconnect (PCI) device, a network interface controller (NIC), a video card, or an I/O device. In certain implementations, memory 170 may be non-uniform access (NUMA), such that memory access time depends on the memory location relative to processing devices 160a and 160b. It should be noted that although, for simplicity, a single processing device 160a or 160b, storage device 180, and device 190 are depicted in FIG. 1, other embodiments of host systems 110a and 110b, 3D image segmentation management system 140, and client device 150 may include multiple processing devices, storage devices, or devices. Processing devices 160a and 160b may include a complex instruction set computing (CISC) microprocessor, a reduced instruction set computing (RISC) microprocessor, a very long instruction word (VLIW) microprocessor, or a processor implementing other instruction sets or processors implementing a combination of instruction sets. Processing devices 160a and 160b may also include one or more special-purpose processing devices such as an application specific integrated circuit (ASIC), a field programmable gate array (FPGA), a digital signal processor (DSP), a network processor, or the like.

Each of the host systems 110a and 110b, 3D image segmentation management system 140, and client device 150 may be a server, a mainframe, a workstation, a personal computer (PC), a mobile phone, a palm-sized computing device, etc. In some embodiments, host systems 110a and 110b, 3D image segmentation management system 140, and/or client device 150 may be separate computing devices. Host systems 110a and 110b, 3D image segmentation management system 140, and/or client device 150 may be implemented by a single computing device. For clarity, some components of 3D image segmentation management system 140, host system 110b, and client device 150 are not shown. 3D image segmentation management system 140 may include a virtual machine-orchestration system. Furthermore, although on-the-fly confidential virtual machine architecture 100 is illustrated as having two host systems, embodiments of the disclosure may utilize any number of host systems.

Host systems 110a and 110b, and 3D image segmentation management system 140, may also include an execution environment 130, which may in turn include one or more virtual machines (VMs) 132a, containers 136a, containers 136b residing within virtual machines 132b, and a host operating system (OS) 120. Execution environment 130 may also include one or more segmentation models 138. VMs 132a and 132b are software implementations of machines that execute programs as though they were actual physical machines. Containers 136a and 136b act as isolated execution environments for different workloads of services, as previously described. Host OS 120 manages the hardware resources of the host system 110a and provides functions such as inter-process communication, scheduling, memory management, and so forth.

Host OS 120 may include a hypervisor 125, also known as a virtual machine monitor (VMM), which can provide a virtual operating platform for VMs 132a and 132b, container 136a, and segmentation model 138, and manage their execution. Hypervisor 125 may manage system resources, including access to physical processing devices, e.g., processors or CPUs, physical memory, e.g., RAM, storage devices, e.g., HDDs or SSDs, and other devices, e.g., sound cards or video cards. The hypervisor 125, typically implemented in software, may emulate and export a bare machine interface to higher level software in the form of virtual processors and guest memory. Higher level software may comprise a standard or real-time OS, may be a highly stripped-down operating environment with limited operating system functionality, and may include traditional OS facilities, etc. Hypervisor 125 may present other software, i.e., "guest" software, the abstraction of one or more VMs that provide the same or different abstractions to various guest software, e.g., a guest operating system or guest applications. It should be noted that in some alternative implementations, hypervisor 125 may be external to host OS 120, rather than embedded within host OS 120, or may replace host OS 120.

The host systems 110a and 110b, 3D image segmentation management system 140, and client device 150 are coupled to each other, e.g., may be operatively coupled, communicatively coupled, or may communicate data/messages with each other, via network 105. Network 105 may be a public network, e.g., the internet, a private network, e.g., a local area network (LAN) or a wide area network (WAN), or a combination thereof. In one embodiment, network 105 may include a wired or a wireless infrastructure, which may be provided by one or more wireless communications systems, such as a WiFi^{™} hotspot connected with the network 105 and/or a wireless carrier system that can be implemented using various data processing equipment and communication towers, e.g., cell towers. The network 105 may carry communications, e.g., data, messages, packets, or frames, between the various components of host systems 110a and 110b, 3D image segmentation management system 140, and/or client device 150.

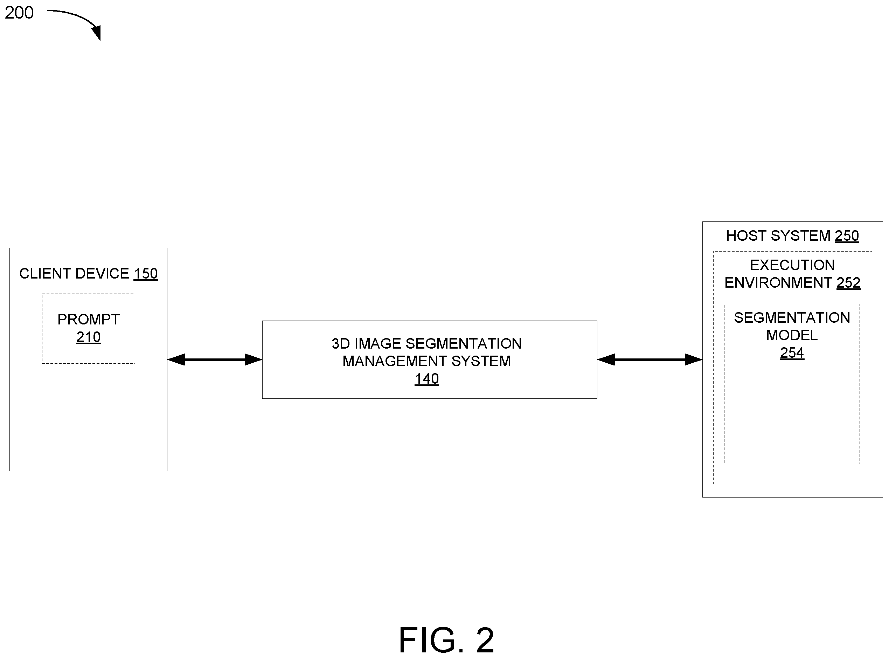

In some embodiments, processing device 160b may execute 3D image segmentation service 142. Client device 150 may send a prompt to 3D image segmentation management system 140. 3D image segmentation management system 140 may respond with a set of slices comprising a set of prompted objects. 3D image segmentation management system 140 may respond with an indication of whether a 3D image satisfies a prompt. Further details regarding 3D image segmentation service 142 will be discussed at FIGs 2-8 below.

FIG. 2 is a block diagram 200 illustrating components of the 3D image segmentation system, in accordance with aspects of the present disclosure. FIG. 2 contains client device 150, in which a prompt 210 has been transmitted to 3D image segmentation management system 140. In some embodiments, 3D image segmentation management system 140 corresponds to 3D image segmentation management system 140 of FIG.1. FIG. 2 also includes host system 250, which may correspond to host system 110a of FIG. 1 and includes execution environment 252. Host OS 120 and hypervisor 125 of FIG. 1 are omitted from FIG. 2 for brevity. Execution environment 252 may correspond to execution environment 130 of FIG. 1. Execution environment 252 may include segmentation model 254.

Referring to FIG. 2, in some embodiments, client device 150 provides a prompt 210 to 3D image segmentation management system 140. 3D image segmentation management system 140 may submit the prompt 210 to segmentation model 254.

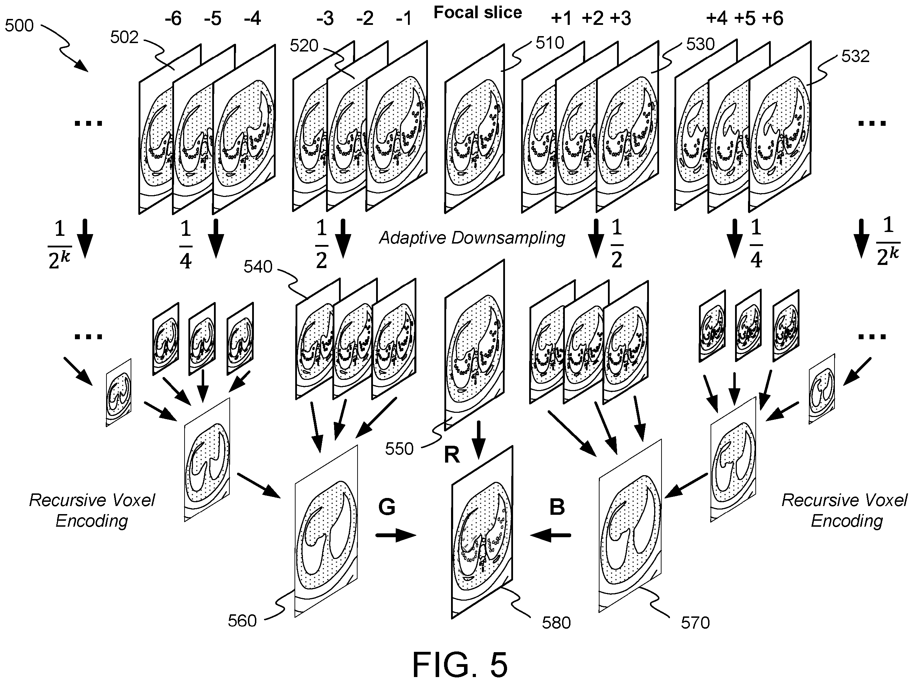

FIG. 3 is a block diagram 300 depicting an embodiment of a 3D image segmentation framework. As shown in FIG. 3, the framework obtains a set 310 of slices. Using FVE (as later depicted in FIG. 5), the framework may encode 320 each slice of the set 310 of slices, compressing 3D context into an RGB format.

In the example of FIG. 3, focal slice 330 is stored in the 3D image segmentation framework 350. The framework enables segmentation guided by text prompts without additional computational overhead. The presence of the prompted object within encoded slices may be determined using a dedicated ISD classification module. In a first example, a text prompt 340 with a value of "Esophagus in CT" results in a positive prediction 370 of the object in the slice 330. In a second example, a text prompt 345 with a value of "Pancreas in CT" results in a negative prediction 375 of the object in the slice 330.

Given a 3D image volume and a text prompt, the model can output binary values for each voxel in the image, with 1's indicating the regions described by the text prompt, and 0's elsewhere. Mathematically, this can be expressed with a 3D image volume $V ∈ {ℝ}^{HxWxD}$ and a text prompt P describing the desired object, for which the promptable segmentation problem is to output a binary mask: $M = f \left(V, P\right) ∈ {\left\{0, 1\right\}}^{HxWxD}$ for which the set of 1's corresponds to the voxels occupied by the described object.

Voxels, short for "volume pixels," are the three-dimensional counterparts of pixels in 2D graphics. Each voxel represents a value on a regular grid in 3D space and can be used to model volumetric data, such as in medical imaging (e.g., CT or MRI scans), geological modeling, or 3D computer graphics. Unlike traditional 3D models that use polygons, voxel representations store spatial data directly, enabling detailed internal structures and uniform resolution. Voxels can be particularly useful in real-time rendering, simulations, and destructible environments in gaming due to their ability to represent complex shapes and physical behaviors efficiently.

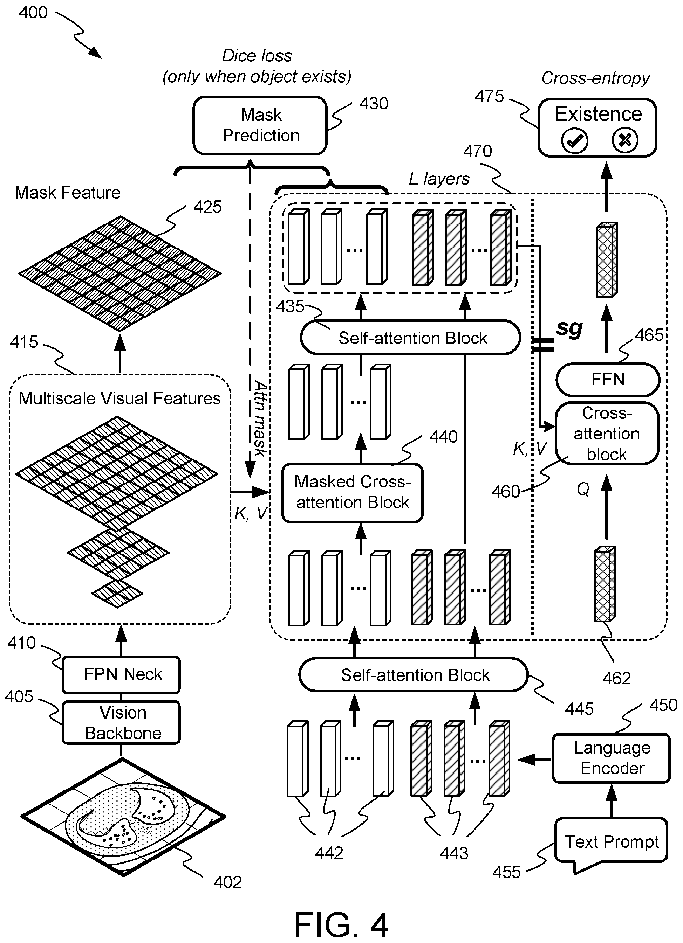

FIG. 4 is a block diagram 400 depicting an embodiment of a 3D image segmentation framework, which may have an architecture comprising the 3D image segmentation management system 140 illustrated in FIG. 1. 2D foundation model architectures can be leveraged to perform slice-by-slice segmentation, while encoding volumetric context into a single image. In some embodiments, a transformer-based decoder architecture is employed.

For each slice 402 of a 3D volume, spatial context around slice 402 may be encoded into an RGB image and fed into transformer mask decoder 470 through a masked cross-attention block 440. The model may be a two-dimensional model such as segmentation model 254 of FIG. 2. The model may comprise one or more self-attention blocks 435 and 445. The model then segments the slice based on the given text prompt 455. An example of such a text prompt is "Esophagus in CT." Transformer mask decoder 470 processes the image features and text embeddings 443 along with learnable segmentation queries 442 and classification query 462 to produce mask prediction 430. Image features comprise multiscale visual features 415 and mask feature 425. The framework further processes the image features and text embeddings 443 through cross-attention block 460 and feed-forward network (FFN) 465 to verify the existence 475 of the prompted object.

As depicted in FIG. 4, a vision backbone 405, further refined by a Feature Pyramid Network (FPN), can be used to extract multi-scale visual features 415 and mask feature 425. Multi-scale visual features are numerical representations of the image at different resolutions, corresponding to different spatial scales. Mask feature 425 comprises numerical values that participate in the final process of producing a binary segmentation mask. An FPN neck 410 is a component of modern computer vision models, particularly for object detection and segmentation tasks that serves as an intermediate "neck" structure between a backbone (e.g., ResNet, EfficientNet) and the head, e.g., classification or bounding box prediction layers. It enhances a model's ability to handle scale variance in visual tasks by building a multi-scale feature representation from a single-resolution input. Text prompt 455 is transformed into text embeddings and combined with learnable segmentation queries, which are processed iteratively through multiple transformer blocks. In each transformer layer, segmentation queries cross-attend via a cross-attention block 460 to visual features at different scales such as in Mask2Former and SEEM, and the random attention masking strategies from Boltz-Former can be adopted to maintain segmentation quality even when the object appears small in the slice. Additionally, In some embodiments, dedicated classification query 462 independently assesses object existence in parallel with transformer mask decoder 470, reducing false positives in text prompt-driven segmentation tasks. Mask prediction 430 comprises a binary mask for the image, with 1's indicating voxels described by the text prompt, and 0's elsewhere. By comparison, existence 475 indicates whether the prompted object exists in the slice, providing a positive result when the prompted object does exist in the slice.

Dice Loss is a loss function commonly used in image segmentation tasks, especially in medical imaging, to measure the overlap between the predicted segmentation and the ground truth. Dice Loss ranges from 0 (perfect overlap) to 1 (no overlap) and is particularly effective for imbalanced datasets in which foreground regions are much smaller than the background. Unlike binary cross-entropy, which treats each pixel independently, Dice Loss considers the overall overlap, making it more sensitive to segmentation accuracy.

To efficiently embed volumetric data into a compact representation suitable for 2D foundation models, fractal volumetric encoding can be used. For a 3D image with height, width, and depth, the algorithm can preserve the height and width while compressing the depth into a small number of channels, e.g. 3 channels as a RGB image in a 2D image format. The algorithm can cut the 3D image into slices, select a focal slice, and downsamples other slices based on their distance from the focal slice. The pixels in the downsampled slices can be rearranged into the channels of the compressed 2D image.

Formally, this fractal encoding process can be expressed as:$ε : {ℝ}^{HxWxD} \to {ℝ}^{HxWxC}$ for which ε transforms 3D voxel data into a multi-channel 2D image. Although this encoding scheme is general and supports arbitrary channel dimensions, encoding into RGB channels (C = 3) may be used to leverage and be compatible with common vision architectures.

FIG. 5 is a block diagram 500 depicting an embodiment of a fractal encoding process, in accordance with some embodiments, which may have an architecture comprising the 3D image segmentation management system illustrated in FIG. 1.

As depicted in FIG. 5, a focal slice 510 can be combined with its surrounding 3D context 520 and 530. The focal slice maintains full resolution, while the context is adaptively downsampled and encoded recursively into compact channels, ensuring efficient spatial representation.

In the example, the focal slice (target segmentation plane) 550 is stored in one RGB channel, e.g., the Red (R) channel at full resolution, while the adjacent upper context slice 530 and adjacent lower context slice 520, the immediate slices on either side of the focal slice, are compressed into two other channels, e.g., the Green (G) and Blue (B) channels, respectively, via fractal-based hierarchical compression, to produce encoded slice 580. This recursive encoding partitions slices into hierarchical groups 540, applying adaptive downsampling proportional to their distance from the focal slice. Downsampling is the process of reducing the resolution or size of data, typically by decreasing the number of samples, pixels, or elements. In image processing and computer vision, downsampling reduces an image's spatial dimensions (height and width), often by averaging or selecting representative pixels in fixed intervals. This helps lower computational cost, reduce memory usage, and remove noise, while retaining essential features.

The process, as shown in FIG. 5, efficiently preserves critical spatial coherence within limited channel bandwidth. A 3D image can be divided into multiple 2D slices, with adjacent downsampled slices incorporated into each 2D slice and then encoded. A two-dimensional model can then consume the encoded 2D slice. Each slice can sequentially become a focal slice, with its adjacent slices downsampled and incorporated into an encoded representation. As illustrated in FIG. 5, the process begins by treating slice 502 (the "-6" slice) as the focal slice and iterating across each slice, making that slice the focal slice, until reaching slice 532 (the "+6" slice). Pseudo code for an embodiment of encoding one side of the 3D context into a single channel is described in Algorithm 1, in which the fractal encoding order k determines the number of slices used.

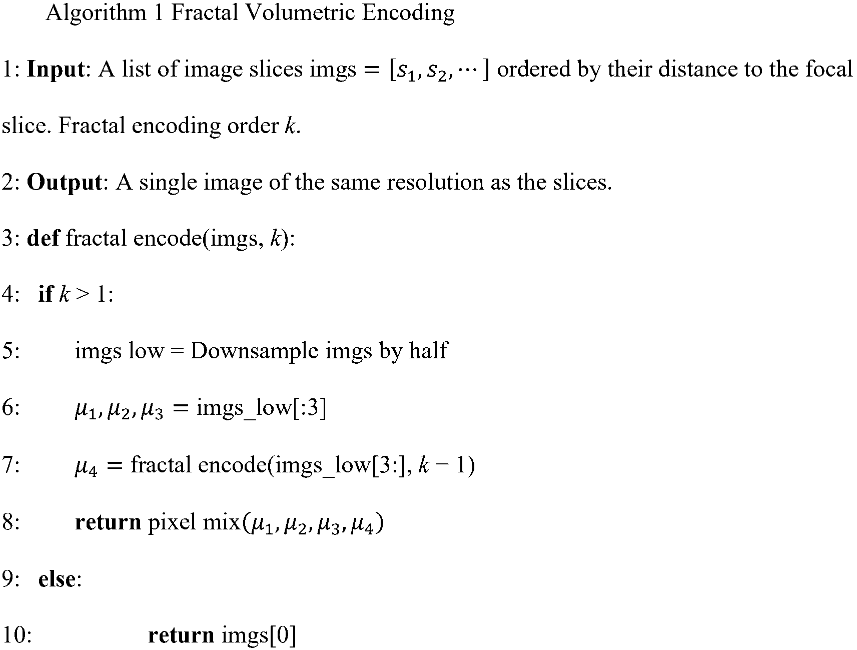

To construct a fractal-encoded image, a pixel mix function can be defined that combines four images into a single image with twice the resolution: $μ ′ = pixel _ mix \left({μ}_{1}, {μ}_{2}, {μ}_{3}, {μ}_{4}\right) ,$ for which ${μ}_{1} , {μ}_{2} , {μ}_{3} , {μ}_{4} ∈ {ℝ}^{h \times w}$ and $μ ′ ∈ {ℝ}^{2 h \times 2 w}$. The pixel level mapping is as follows: $μ ′ \left(2x,2y\right) = {μ}_{1} \left(x, y\right)$ $μ ′ \left(2x,2y+1\right) = {μ}_{2} \left(x, y\right)$ $μ ′ \left(2x+1,2y\right) = {μ}_{3} \left(x, y\right)$ $μ ′ \left(2x+1,2y+1\right) = {μ}_{4} \left(x, y\right)$ for x = 0, ···, *h* - 1 and *y* = 0, ···,*w* - 1.

For an encoding of order k, the total number of slices encoded per side is *N(k)* = *3k* - 2. Including the focal slice, the RGB-encoded image represents a total of *N_{rgb}*(*k*) = 6k - 3 slices. Padding can be applied by repeating the last available slice if needed.

To theoretically justify the proposed fractal encoding, its mathematical equivalence to traditional 3D convolution operations commonly employed in volumetric segmentation methods can be established. Patch-based vision models, such as ViT and Focal-Net, typically process an input image by dividing it into disjoint patches (resolution *p* × p). Each patch ${P}_{ij} ∈ {ℝ}^{p \times p \times C}$ is embedded with a linear projection as follows: ${e}_{ij} = Linear \left(Flatten\left({P}_{ij}\right)\right) ,$ for which *(i, j)* denotes the spatial indices of the patch. The network then processes the patch embeddings *eᵢⱼ* in units.

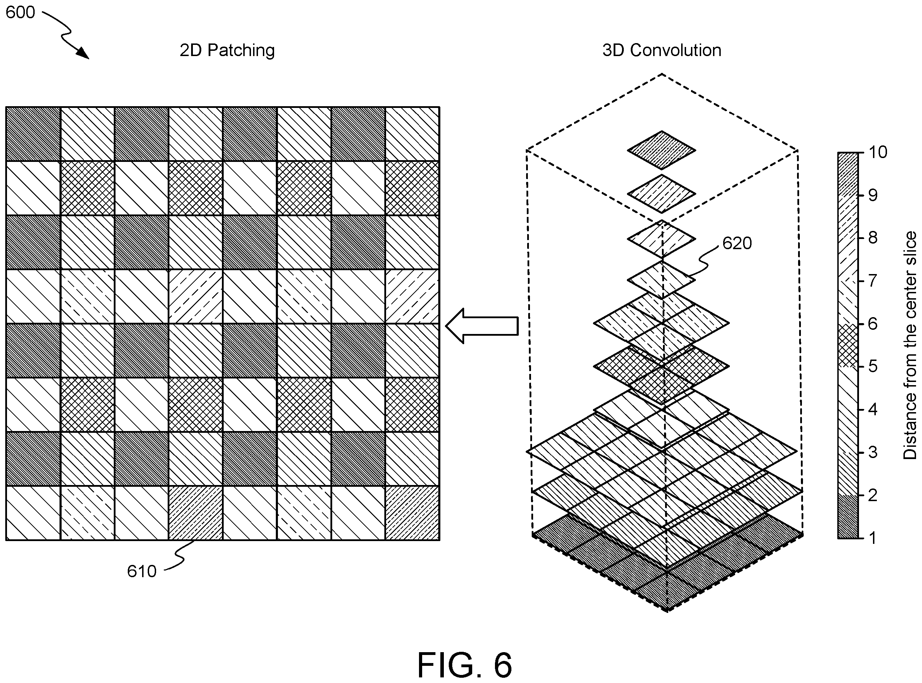

FIG. 6 is a visualization 600 of the encoding of one side of a 3D context, in accordance with some embodiments of the present disclosure. The 2D patching process on fractal-encoded channels is mathematically equivalent to adaptive-resolution 3D convolution. Each colored square 610 represents a pixel/voxel within a 2D patch or corresponding 3D voxel neighborhood. Pixel colors indicate distance from the focal slice.

In some embodiments, within the fractal encoding, each 2D patch aggregates voxels aligned along the depth dimension (z-axis), forming compact neighborhoods that may be referred to as "super pixels". Mathematically, each patch P 610 captures a voxel neighborhood V 620, as illustrated in FIG. 6.

A mathematical equivalence may be established between applying linear transformations (patch embeddings) on fractal-encoded patches and performing an adaptive-resolution 3D convolution operation.

Theorem 1 (Equivalence to 3D Convolution). Given a fractal encoding function ε, defined as: $E = {ℝ}^{H \times W \times D} \to {ℝ}^{H \times W \times C} ,$ applying a linear embedding operator on patches of the encoded image corresponds mathematically to performing an adaptive-resolution 3D convolution on the original volume.

In some embodiments, establishing this equivalence suggests that each "super pixel" be entirely contained within a single model patch. Consequently, the minimal patch size required can be determined by the encoding order k, explicitly as 2^{*k*-1}*.* Thus, fractal encoding inherently represents an adaptive, multi-scale 3D convolution operation, efficiently rearranged into a patch-compatible multi-channel format, e.g., RGB, suitable for standard 2D vision architectures.

A major challenge for purely text-prompted segmentation in 3D is reliably determining the presence of prompted objects within each slice. To overcome this, an Independent Segmentation Discriminator (ISD) can be applied, which uses a dedicated classification query vector q in parallel to the segmentation transformer mask decoder.

In attention mechanisms, especially in a transformer architecture, the terms *q, k,* and v refer to query, key, and value vectors. These are central to how attention computes relationships between elements in a sequence. Query (q) represents the current word or token receiving focus, akin to asking a question: "What should I pay attention to?" Key (k) represents each token in the sequence and acts like a label: "Here's what I contain." Value (v) contains the actual information that will be aggregated based on the attention score. Given matrices *Q, K,* and V, each of which represents a batch of *q, k,* and v vectors for all tokens, attention weights may be determined as: $Attention \left(Q, K, V\right) = softmax \left(\frac{{QK}^{T}}{\sqrt{{d}_{k}}}\right) V$ Solving the equation involves 1) computing dot products between each query and keys to get attention scores; 2) Scaling the scores by $\sqrt{{d}_{k}}$ (where *dₖ* is the key dimension) to prevent large values; 3) applying the softmax function to get attention weights; and 4) using these weights to compute a weighted sum of the values. A goal of *q, k,* and v is to let the model dynamically focus on different parts of the input, capture dependencies regardless of position, and enable parallel processing.

As shown on the right side in FIG. 4, Q cross-attends to the hidden state of the segmentation queries and the text embeddings at the end of each transformer block and then updates itself through FFN 465.

After the last transformer block, Q produces a binary classification probability *ω* ∈ [0,1] through a linear layer, representing the existence 475 of the prompted object. At inference time, the final segmentation mask prediction *M̂* for a given slice is computed as: ${\hat{M}}_{final} = \hat{M} ⋅ \left(ω>0.5\right) .$

The ISD is trained jointly with the segmentation module to classify the existence of the prompted object based on the transformer hidden states in segmentation. ω is supervised jointly with the segmentation prediction *M̂* through the following loss function: $L \left(\hat{M}, y, M\right) = \left\{\begin{matrix}S \left(\hat{M}, M\right) - log ω & M \neq 0 \\ - log \left(1-ω\right) & M = 0\end{matrix}\right.$

In some embodiments, segmentation masks are supervised only on positive slices using segmentation loss S, training with additional negative slices can introduce gradients unrelated to accurate mask boundary detection, negatively impacting segmentation performance. To mitigate this issue, in an embodiment, a gradient cut-off design can be implemented, preventing negative gradients from propagating back into the segmentation module, thus ensuring segmentation quality remains consistent despite the presence of numerous negative slices. The classification query vector q is updated in each layer as: ${q}_{l + 1} = FFN \left(LN\left({q}_{l}+CrossAttn\left({q}_{l},sg\left(\left[{S}_{l}, {T}_{l}\right]\right)\right)\right)\right) ,$ for which LN is layer normalization, *Sₗ* and *Tₗ* are the segmentation queries and the text embeddings after the *l*-th layer, and sg is the stop-gradient operator.

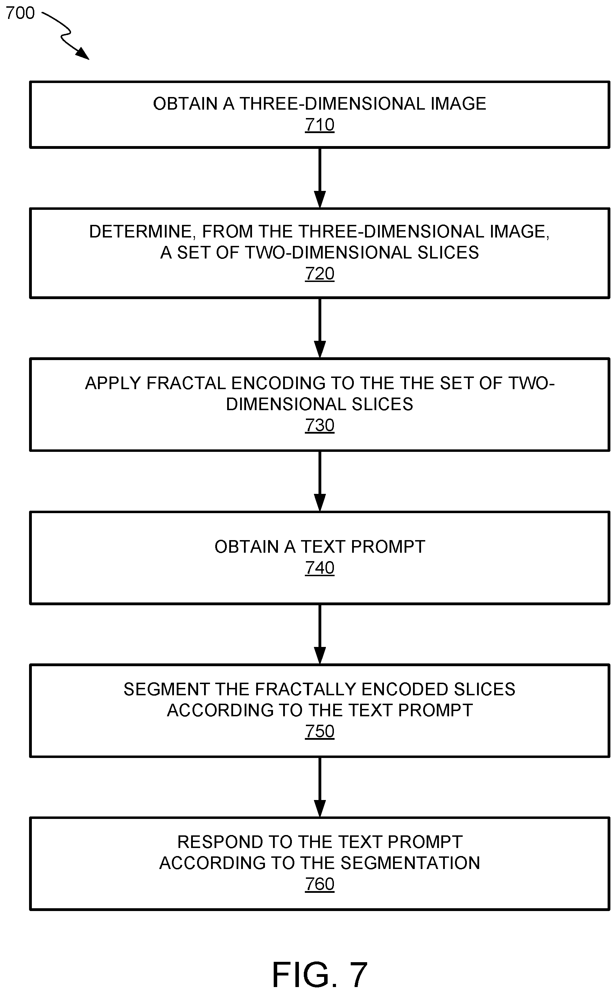

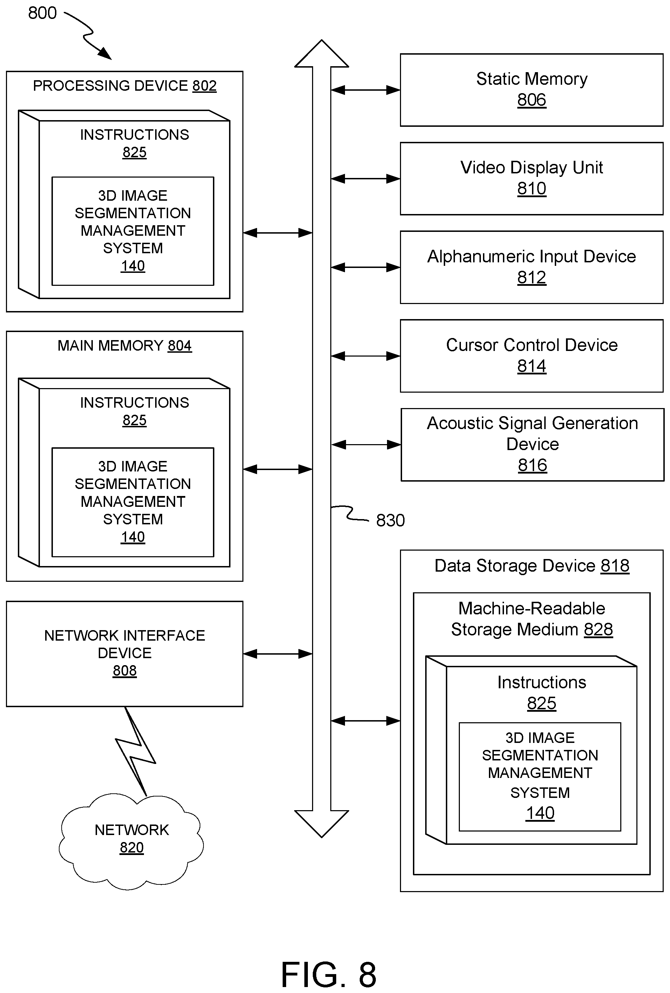

FIG. 7 is a flow diagram of a method 700 for segmenting a 3D image, in accordance with some embodiments of the present disclosure. Method 700 may be performed by processing logic that may comprise hardware, e.g., circuitry, dedicated logic, programmable logic, a processor, a processing device, a central processing unit (CPU), or a system-on-chip (SoC), software, e.g., instructions running/executing on a processing device, firmware, e.g., microcode, or a combination thereof. In some embodiments, the method 700 may be performed by processing device 802, as illustrated in FIG. 8.

With reference to FIG. 7, method 700 illustrates example functions used by various embodiments. Although specific function blocks ("blocks") are disclosed in method 700, such blocks are examples. That is, embodiments are well suited to performing various other blocks or variations of the blocks recited in method 700. It is appreciated that the blocks in method 700 may be performed in an order different than presented, and that not all of the blocks in method 700 may be performed.

At block 710, method 700 may include obtaining a three-dimensional image. The three-dimensional image may be divisible into a set of two-dimensional slices. The three-dimensional image may be obtained from CT or MRI data.

At block 720, method 700 may include determining, from the three-dimensional image, a set of two-dimensional slices. As an example, the set of slices may comprise focal slices.

At block 730, method 700 may include applying fractal encoding to the set of two-dimensional slices. The fractal encoding may comprise a focal slice, along with an adjacent upper slice and an adjacent lower slice. The focal slice may be stored in a first channel at full resolution. The adjacent upper and adjacent lower slices may be adaptively downsampled and encoded recursively into secondary channels. For example, using an RGB format, the focal slice may be stored in the red channel, the upper slices may be encoded and stored in the green channel, and the lower slices encoded and stored in the blue channel. The adjacent slices may be compressed via fractal-based hierarchical compression. The fractal-based hierarchical compression may comprise adaptive downsampling proportional to a distance from the focal slice. As a technical effect, the set of fractally-encoded slices may be applied against a two-dimensional model, reducing memory consumption and computational costs.

At block 740, method 700 may include obtaining a text prompt. Text prompts may be transformed into text embeddings and combined with learnable segmentation queries, which are processed iteratively through multiple transformer blocks. In some embodiments, a dedicated classification query in parallel to the transformer mask decoder independently assesses object existence, reducing false positives.

At block 750, method 700 may include segmenting the fractally encoded slices according to the text prompt. At each transformer layer, segmentation queries may cross-attend via a cross-attention block to visual features at different scales.

At block 760, method 700 may include responding to the text prompt according to the segmentation.

### Additional Examples

An example computer-implemented method comprises: obtaining a three-dimensional image; determining, from the three-dimensional image, a set of two-dimensional slices; applying fractal encoding to the set of two-dimensional slices; obtaining a text prompt; segmenting the fractally encoded slices according to the text prompt; and responding to the text prompt according to the segmentation.

An example system comprises a processing device and a computer-readable medium storing instructions that are operative upon execution by the processing device to: obtain a three-dimensional image; determine, from the three-dimensional image, a set of two-dimensional slices; apply fractal encoding to the set of two-dimensional slices; obtain a text prompt; segment the fractally encoded slices according to the text prompt; and respond to the text prompt according to the segmentation.

An additional example comprises a non-transitory machine-readable storage medium storing instructions, which, when executed by a processing device, cause the processing device to: obtain a three-dimensional image; determine, from the three-dimensional image, a set of two-dimensional slices; apply fractal encoding to the set of two-dimensional slices; obtain a text prompt; segment the fractally encoded slices according to the text prompt; and respond to the text prompt according to the segmentation.

Alternatively, or in addition to the other examples described herein, examples include any combination of the following:
- the fractally encoded slices are filtered using an independent segmentation discriminator;
- the fractal encoding comprises a focal slice, an adjacent upper slice, and an adjacent lower slice;
- the focal slice is stored in a first channel at full resolution;
- an adjacent upper slice and an adjacent lower slice are compressed into a second channel and a third channel via fractal-based hierarchical compression;
- the fractal-based hierarchical compression comprises adaptive downsampling proportional to a distance from the focal slice; and
- the fractal encoding results in a red/green/blue (RGB) representation.
A method obtains a three-dimensional image; a set of two-dimensional slices may be determined from the three-dimensional image; fractal encoding may be applied to the set of two-dimensional slices; a text prompt may be obtained; the fractally encoded slices may be segmented according to the text prompt; and a response may be provided to the text prompt according to the segmentation.

### Example Operating Environment

FIG. 8 is a block diagram of an example computing device that may perform one or more of the operations described herein, in accordance with some embodiments of the present disclosure. FIG. 8 illustrates an example computing device 800, within which a set of instructions may segment a 3D image, in accordance with some embodiments of the present disclosure, as discussed in further detail herein.

In alternative embodiments, the machine may be connected, e.g., networked, to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one embodiment, computer system 800 may be representative of a server.

The exemplary computer system 800 includes a processing device 802, a main memory 804, e.g., read-only memory (ROM), flash memory, dynamic RAM (DRAM)), static memory 805, e.g., flash memory or static RAM (SRAM), and a data storage device 818, that communicate with each other via a bus 830. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computing device 800 may further include a network interface device 808 which may communicate with a network 820. The computing device 800 also may include a video display unit 810, e.g., a liquid crystal display (LCD) or a cathode ray tube (CRT), an alphanumeric input device 812, e.g., a keyboard, a cursor control device 814, e.g., a mouse and an acoustic signal generation device 815, e.g., a speaker. In one embodiment, video display unit 810, alphanumeric input device 812, and cursor control device 814 may be combined into a single component or device, e.g., an LCD touch screen.

Processing device 802 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 802 may also be one or more special-purpose processing devices such as an application specific integrated circuit (ASIC), a field programmable gate array (FPGA), a digital signal processor (DSP), network processor, or the like. The processing device 802 is configured to execute 3D image segmentation instructions 825, for performing the operations and steps discussed herein.

The data storage device 818 may include a machine-readable storage medium 828, on which is stored one or more sets of 3D image segmentation instructions 825, e.g., software embodying any one or more of the methodologies of functions described herein. The 3D image segmentation instructions 825 may also reside, completely or at least partially, within the main memory 804 or within the processing device 802 during execution thereof by the computer system 800; the main memory 804 and the processing device 802 also constituting machine-readable storage media. The 3D image segmentation instructions 825 may further be transmitted or received over a network 820 via the network interface device 808.

The machine-readable storage medium 828 may also be used to store instructions to perform the methods described herein. While the machine-readable storage medium 828 is shown in an exemplary embodiment to be a single medium, the term "machine-readable storage medium" should be taken to include a single medium or multiple media, e.g., a centralized or distributed database, or associated caches and servers, that store the one or more sets of instructions. A machine-readable storage medium 828 includes any mechanism for storing information in a form, e.g., software, processing application, readable by a machine, e.g., a computer. The machine-readable storage medium 828 may include, but is not limited to, magnetic storage medium, e.g., a floppy diskette; an optical storage medium, e.g., a CD-ROM; magneto-optical storage medium; read-only memory (ROM); random-access memory (RAM); erasable programmable memory, e.g., EPROM or EEPROM; flash memory; or another type of medium suitable for storing electronic instructions.

Unless specifically stated otherwise, terms such as "recognizing," "sending," "receiving," "selecting," "extracting," "installing," "parsing," "presenting," or the like, refer to actions and processes performed or implemented by computing devices that manipulate and transform data represented as physical (electronic) quantities within the computing devices' registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general-purpose computing device selectively programmed by a computer program stored in the computing device. Such a computer program may be stored in a computer-readable non-transitory storage medium.

The methods and illustrative examples described herein are not inherently related to any particular computer or other apparatus. Various general-purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

Reference throughout this specification to "one embodiment," "an embodiment," "one implementation," "an implementation," "one example," or "an example" means that a particular feature, structure, or characteristic described in connection with the embodiment, implementation, or example is included in at least one embodiment of the present disclosure. Thus, appearances of the above-identified phrases in various places throughout this specification are not necessarily all referring to the same embodiment, implementation, or example. In addition, it should be appreciated that the figures provided herewith are for explanation purposes to persons ordinarily skilled in the art.

Embodiments in accordance with the present disclosure may be embodied as an apparatus, method or computer program product. Accordingly, the present disclosure may take the form of an entirely hardware-comprised embodiment, an entirely software-comprised embodiment (including firmware, resident software, microcode, etc.) or an embodiment combining software and hardware aspects that may generally be referred to herein as a "circuit," "module," or "system." Furthermore, embodiments of the present disclosure may take the form of a computer program product embodied in any tangible medium of expression having computer-usable program code embodied in the medium.

As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times, or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure, e.g., circuitry, that performs the task or tasks during operation. As such, the unit/circuit/component can be said to be configured to perform the task, or configurable to perform the task, even when the specified unit/circuit/component is not currently operational, e.g., is not on. The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112(f) for that unit/circuit/component. Additionally, "configured to" or "configurable to" can include generic structure, e.g., generic circuitry, that is manipulated by software and/or firmware, e.g., an FPGA or a general-purpose processor executing software, to operate in manner that is capable of performing the task(s) at issue. "Configured to" may also include adapting a manufacturing process, e.g., a semiconductor fabrication facility, to fabricate devices, e.g., integrated circuits, that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

Any combination of one or more computer-usable or computer-readable media may be utilized. For example, a computer-readable medium may include one or more of a portable computer diskette, a hard disk, a random-access memory (RAM) device, a read-only memory (ROM) device, an erasable programmable read-only memory (EPROM or Flash memory) device, a portable compact disc read-only memory (CDROM), an optical storage device, and a magnetic storage device. Computer program code for carrying out operations of the present disclosure may be written in any combination of one or more programming languages. Such code may be compiled from source code to assembly language or machine code suitable for the device or computer on which the code will be executed.

Embodiments may also be implemented in cloud computing environments. In this description and the following claims, "cloud computing" may be defined as a model for enabling ubiquitous, convenient, on-demand network access to a shared pool of configurable computing resources, e.g., networks, servers, storage, applications, and services, that can be rapidly provisioned (including via virtualization) and released with minimal management effort or service provider interaction and then scaled accordingly. A cloud model can be composed of various characteristics, e.g., on-demand self-service, broad network access, resource pooling, rapid elasticity, and measured service, service models, e.g., Software as a Service ("SaaS"), Platform as a Service ("PaaS"), and Infrastructure as a Service ("IaaS"), and deployment models, e.g., private cloud, community cloud, public cloud, and hybrid cloud.

The flow diagrams and block diagrams in the attached figures illustrate the architecture, functionality, and operation of possible implementations of systems, methods, and computer program products according to various embodiments of the present disclosure. In this regard, each block in the flow diagrams or block diagrams may represent a module, segment, or portion of code, which comprises one or more executable instructions for implementing the specified logical function(s). It will also be noted that each block of the block diagrams or flow diagrams, and combinations of blocks in the block diagrams or flow diagrams, may be implemented by special purpose hardware-based systems that perform the specified functions or acts, or combinations of special purpose hardware and computer instructions. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flow diagram and/or block diagram block or blocks.

The foregoing description, for the purpose of explanation, has been described with reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the embodiments and their practical applications, to thereby enable others skilled in the art to best utilize the embodiments and various modifications as may be suited to the particular use contemplated. Accordingly, the present embodiments are to be considered as illustrative and not restrictive, and the embodiments of the present disclosure are not to be limited to the details given herein, but may be modified within the scope and equivalents of the appended claims.

## Claims

1. A computer-implemented method, comprising:
obtaining (710) a three-dimensional image;
determining (720), from the three-dimensional image, a set of two-dimensional slices;
applying (730) fractal encoding to the set of two-dimensional slices;
obtaining (740) a text prompt;
segmenting (750) the fractally encoded slices according to the text prompt; and
responding (760) to the text prompt according to the segmentation.

2. The method of claim 1, wherein the fractally encoded slices are filtered using an independent segmentation discriminator.

3. The method of claim 1 or 2, wherein the fractal encoding comprises a focal slice, an adjacent upper slice, and an adjacent lower slice.

4. The method of claim 3, wherein the focal slice is stored in a first channel at full resolution.

5. The method of claim 3, wherein the adjacent upper slice and the adjacent lower slice are compressed into a second channel and a third channel via fractal-based hierarchical compression.

6. The method of claim 5, wherein the fractal-based hierarchical compression comprises adaptive downsampling proportional to a distance from the focal slice.

7. The method of any of claims 1-6, wherein the fractal encoding results in a red/green/blue (RGB) representation.

8. A system, comprising:
a processing device (802); and
a memory (804) storing instructions that are operative upon execution by the processing device (802) to:
obtain a three-dimensional image;
determine, from the three-dimensional image, a set of two-dimensional slices;
apply fractal encoding to the set of two-dimensional slices;
obtain a text prompt;
segment the fractally encoded slices according to the text prompt; and
respond to the text prompt according to the segmentation.

9. The system of claim 8, wherein the fractally encoded slices are filtered using an independent segmentation discriminator.

10. The system of claim 8, wherein the fractal encoding comprises a focal slice, an adjacent upper slice, and an adjacent lower slice.

11. The system of claim 10, wherein the focal slice is stored in a first channel at full resolution.

12. The system of claim 10, wherein the adjacent upper slice and the adjacent lower slice are compressed into a second channel and a third channel via fractal-based hierarchical compression.

13. The system of claim 12, wherein the fractal-based hierarchical compression comprises adaptive downsampling proportional to a distance from the focal slice.

14. The system of any of claims 8-13, wherein the fractal encoding results in a red/green/blue (RGB) representation.

15. A non-transitory machine-readable storage medium (828) storing instructions (825) which, when executed by a processing device (802), cause the processing device (802) to perform the method of any of claims 1-7.
